# EUROPÄISCHE PATENTANMELDUNG

(11) **EP 2 654 245 A2**
(43) Veröffentlichungstag der Anmeldung: **23.10.2013**
(21) Anmeldenummer: 13162938.8
(22) Anmeldetag: 09.04.2013
(51) Int. Cl.: H04L 12/40

(54) **Steuereinrichtung mit Signalzusammenfassung**

(30) Priorität: 18.04.2012 DE 102012206390
(71) Anmelder: Magna Car Top Systems GmbH, 74321 Bietigheim-Bissingen (DE)
(72) Erfinder: Waniek, Jörg-Felix, 74343 Sachsenheim-Hohenhaslach (DE)
(74) Vertreter: Rausch, Gabriele

(57) **Zusammenfassung**

Eine Steuereinrichtung zur Steuerung eines Teilsystems eines Kraftfahrzeuges, wobei die Steuereinrichtung an der fahrzeugseitigen Schnittstelle zumindest einen Bereich aufweist, der als Eindraht-Bus zur seriellen Übertragung von Fahrzeugdaten ausgebildet ist und wobei die Steuereinrichtung diesen Bereich gleichzeitig benutzt um mindestens ein weiteres Eingangssignal zu verarbeiten. Der Bereich der Steuereinrichtung weist Mittel zur Frequenzabtastung der Eingangssignale auf, wobei die Mittel zur Frequenzabtastung dazu eingerichtet sind, das weitere Eingangssignal von den über den Eindraht-Bus seriell übertragenen Fahrzeugdaten unterscheiden zu können. Außerdem werden Verfahren zum Betreiben eines Eindraht-Busses einer Steuereinrichtung beschrieben, nach denen ein Computerprogramm auf einem Mikrocontroller der Steuereinrichtung durch eine simultane oder sequenzielle Abfrage an Analog- oder Digitaleingängen des Mikrocontrollers die jeweils anliegenden Signale auf Gültigkeit prüft.

## Beschreibung

Die vorliegende Erfindung betrifft eine Steuereinrichtung zur Steuerung eines Cabrioverdeckes wobei die Steuereinrichtung an der fahrzeugseitigen Schnittstelle zumindest einen Bereich aufweist, der als Eindraht-Bus zur seriellen Übertragung von Fahrzeugdaten ausgebildet ist und wobei die Steuereinrichtung diesen Bereich gleichzeitig benutzt, um mindestens ein weiteres Eingangssignal zu verarbeiten.

In einer derartigen Steuereinrichtung zur Steuerung eines Cabriodaches wird nach dem Stand der Technik an der Fahrzeugseitigen Schnittstelle für jedes Eingangs- oder Ausgangssignal ein separater Bereich vorgehalten, der als Kontakt-Pin einer Steckverbindung ausgeführt ist. Eingangs-und Ausgangssignale sind beispielsweise digitale Signale von Positionsschaltern und analoge oder digitale Signale von verschiedenen Sensoren und Aktuatoren. Auch serielle Eindraht-Bussysteme, wie beispielsweise ein LIN-Bus, werden häufig eingesetzt um Steuersignale zwischen Teilsystemen eines Kraftfahrzeugs zu übertragen.

Bei einem LIN-Bus handelt es sich um einen sogenannten Feldbus, der in elektronische Komponenten, wie bspw. Aktuatoren und Sensoren vorwiegend im Kraftfahrzeugbau eingebunden ist. Die Abkürzung LIN (Local Interconnect Network) steht für lokales Verbindungsnetzwerk. LIN-Busse sind weniger komplex ausgebildet und kostengünstiger als CAN (Controller Area Network)-Busse, es ist jedoch nur eine geringere Datenübertragungsrate als bei CAN-Bussen möglich.

Über LIN-Busse sind elektronische Komponenten miteinander verbunden, die nicht unmittelbar der Fortbewegung des Kraftfahrzeugs dienen, und sind also am ehesten im Fahrzeugaufbau verbreitet oder werden für Klappenstellmotoren von Lüftungsanlagen, Motoren zur Sitzverstellung oder für die Türelektronik eingesetzt. Aber auch in Teilen von Dächern von Fahrzeugen können Steuereinrichtungen aufgenommen sein, welche über einen LIN-Bus mit anderen Teilsystemen von Fahrzeugen kommunizieren.

Ein LIN-Bus kann von einem Steuergerät während des Fahrzeugbetriebs benötigt werden und wird oft auch in der Produktion verwendet, um Steuereinrichtungen zu programmieren und zu konfigurieren.

Ein Verfahren zum Betreiben eines LIN-Busses ist aus der DE102006032217 A1 bekannt. Das Verfahren betrifft ein Bussystem dessen Spezifikationen in einem Normalbetrieb durch einen LIN-Bus beschrieben sind, bei dem zur Durchführung eines Sonderbetriebs ein alternatives Kommunikationsprotokoll durch das LIN-Protokoll getunnelt wird. Durch ein derartiges Tunneln des Kommunikationsprotokolls durch das LIN-Protokoll werden funktionelle Eigenschaften des LIN-Busses oder mindestens eines Teilnehmers des LIN-Busses modifiziert. Somit ist es möglich, dass der mindestens eine Teilnehmer während des Sonderbetriebs technische Funktionen durchführt oder auf technische Wechselwirkungen reagiert, die sich von Funktionen und Wechselwirkungen des Normalbetriebs unterscheiden. Zur Durchführung des Verfahrens wird ein mit dem Kommunikationsprotokoll verbundener Dienst auf einen Rahmen bzw. Frame des LIN-Protokolls abgebildet. Somit wird ein LIN-Rahmen dazu benutzt, um ein anderes Kommunikationsprotokoll darin zu übertragen. Während des Sonderbetriebs kann mindestens ein Teilnehmer des LIN-Busses über das Kommunikationsprotokoll programmiert werden. Alternativ oder begleitend kann während des Sonderbetriebs auch eine Diagnose durchgeführt werden, wobei das alternative Kommunikationsprotokoll auf einem als Diagnoserahmen ausgebildeten Rahmen des LIN-Protokolls abgebildet wird. Mit dem Verfahren kann somit ein Diagnosemechanismus für einen LIN-Knoten, in der Regel ein Slave, durchgeführt werden.

Eine Kommunikationsverbindung zwischen Kraftfahrzeug und Steuereinrichtung zur Steuerung eines Cabrioverdeckes muss häufig ein sogenanntes SPEED-Signal aufweisen. Ein derartiges SPEED-Signal, auch Tachometer-Signal genannt, kann entweder als digitales oder als analoges Frequenzsignal ausgebildet sein und gibt Auskunft über die Fahrzeuggeschwindigkeit.

Information über die Fahrzeuggeschwindigkeit wird von vielen Fahrzeugen entweder nur als Frequenzsignal oder nur als digitales Signal entsprechend dem LIN-Bus Protokoll zur Verfügung gestellt. Bei den genannten Steuereinrichtungen zur Steuerung eines Cabrioverdeckes ist es daher erwünscht, dass diese mit möglichst vielen Anbindungsszenarien in verschiedenen Kraftfahrzeugtypen und -modellen kompatibel sind und gleichzeitig Verbindungsstecker mit einer möglichst geringen Zahl an Kontaktpins aufweisen, um Kosten zu reduzieren.

Verbindungsstecker mit einer möglichst geringen Zahl an Kontaktpins ermöglichen einfache und einheitliche, und somit kostengünstige, Kabelbäume auf der Fahrzeugseite und auf der Seite des Teilsystems, sowohl zur Programmierung während der Produktion, als auch im Betrieb des Teilsystems im Fahrzeug.

Es ist eine Aufgabe der Erfindung, Steuereinrichtungen der genannten Art in dieser Hinsicht zu verbessern und eine einfache und kostengünstige Steckeranbindung zu ermöglichen. Die Lösung der Aufgabe erfolgt durch eine Steuereinrichtung mit den Merkmalen des Anspruchs 1 sowie durch Verfahren zum Betreiben eines Eindraht-Busses nach Anspruch 6 und Anspruch 7.

Erfindungsgemäß weist eine Steuereinrichtung zur Steuerung eines Cabrioverdeckes an der fahrzeugseitigen Schnittstelle zumindest einen Bereich auf, der als Eindraht-Bus zur seriellen Übertragung von Fahrzeugdaten ausgebildet ist, wobei die Steuereinrichtung diesen Bereich gleichzeitig benutzt um mindestens ein weiteres Eingangssignal zu verarbeiten, und wobei dieser Bereich der Steuereinrichtung mit Mitteln zur Frequenzanalyse der Eingangssignale verbunden ist. Diese Mittel zur Frequenzanalyse sind erfindungsgemäß dazu eingerichtet, das weitere Eingangssignal von den über den Eindraht-Bus seriell übertragenen Fahrzeugdaten unterscheiden zu können.

Da im Fahrzeugbau geeignete Steckverbinder oft nur in groben Größenabstufungen wie beispielsweise 6, 12 oder 20 Pins verfügbar sind, kann die Einsparung von einzelnen Pins an der Schnittstelle zwischen Fahrzeug und Steuereinrichtung zu weitreichenden Vereinfachungen in den erforderlichen Kabelbäumen und somit zu signifikanten Kosteneinsparungen führen. Die Zusammenlegung von mehreren Signalen auf einen Bereich der Schnittstelle, das heißt üblicherweise auf einen Pin eines Steckverbinders, stellt aber besondere Anforderungen an die nachfolgenden Komponenten in der Steuereinrichtung. Hard- und Software müssen durch geeignete Maßnahmen in die Lage versetzt werden, die Signale zuverlässig voneinander unterscheiden und entsprechend weiter verarbeiten zu können.

Weiterbildungen der Erfindung sind in den abhängigen Ansprüchen, der Beschreibung sowie den beigefügten Zeichnungen angegeben.

Vorzugsweise ist die Eindraht-Bus Schnittstelle der Steuereinrichtung als LIN-Bus ausgebildet. Die erfindungsgemäße Steuereinrichtung eignet sich besonders zur Verarbeitung von niederfrequenten weiteren Eingangssignalen, da sich diese aufgrund ihrer Signalcharakteristika besser von den höherfrequenten Signalen der Eindraht-Bus Schnittstellen unterscheiden lassen.

Insbesondere eignet sich die erfindungsgemäße Steuereinrichtung zur Verarbeitung von Steuersignalen, die von der Fahrzeuggeschwindigkeit abhängen. Üblicherweise werden solche Signale in der Fahrzeugtechnik als Tachometer- oder SPEED-Signal bezeichnet und liegen oft in einem Frequenzbereich zwischen null und dreihundert Hertz.

In einer vorteilhaften Ausgestaltung der erfindungsgemäßen Verfahren wird das weitere Eingangssignal mit einer Frequenz abgetastet, die mindestens doppelt so hoch ist, wie die höchste Frequenz der an der Eindraht-Bus Schnittstelle in einem standardisierten Normalbetrieb verwendeten Signale. Diese in einem standardisierten Normalbetrieb verwendete Frequenz liegt üblicherweise höher als 5000 Hertz.

Die vorliegende Erfindung offenbart zwei Verfahren zur Unterscheidung von LIN- und SPEED-Signalen mittels Software in einem Mikrocontroller.

In einem erfindungsgemäßen Verfahren zum Betreiben eines Eindraht-Busses einer Steuereinrichtung prüft ein Computerprogramm auf einem Mikrocontroller der Steuereinrichtung durch eine simultane Abfrage an einem RxD Eingang und einem Analog- oder Digitaleingang des Mikrocontrollers die jeweils anliegenden Signale auf Gültigkeit.

Gemäß einer weiteren Ausgestaltung der Erfindung prüft ein Computerprogramm auf einem Mikrocontroller durch eine sequenziell alternierende Abfrage an einem RxD Eingang des Mikrocontrollers das jeweils anliegende Signal auf Gültigkeit. Dies ermöglicht eine besonders einfache und kostengünstige Bauweise, da in diesem Fall ein LIN-Transceiver die Aufbereitung der Signale übernehmen kann, und neben einem Pull-up Widerstand keine weiteren elektronischen Bauteile im Eingangsbereich der Steuereinrichtung erforderlich sind.

Die Erfindung wird im Folgenden beispielhaft unter Bezugnahme auf die Zeichnungen beschrieben.
- Fig. 1: zeigt schematisch eine Schaltung zur Verarbeitung von LIN- und SPEED-Signalen an zwei getrennten Eingängen entsprechend dem aktuellen Stand der Technik.
- Fig. 2: zeigt schematisch eine erfindungsgemäße Schaltung zur Verarbeitung von LIN- und SPEED-Signalen an einem Eingang.
- Fig. 3: zeigt eine weitere Ausführungsform einer erfindungsgemäßen Schaltung zur Verarbeitung von LIN- und SPEED-Signalen an einem Eingang.
- Fig. 4: zeigt eine weitere Ausführungsform einer erfindungsgemäßen Steuereinrichtung.
- Fig. 5: zeigt schematisch den Ablauf eines erfindungsgemäßen Verfahrens zum Betreiben eines Eindraht-Busses.
- Fig. 6: zeigt schematisch den Ablauf eines weiteren erfindungsgemäßen Verfahrens zum Betreiben eines Eindraht-Busses.

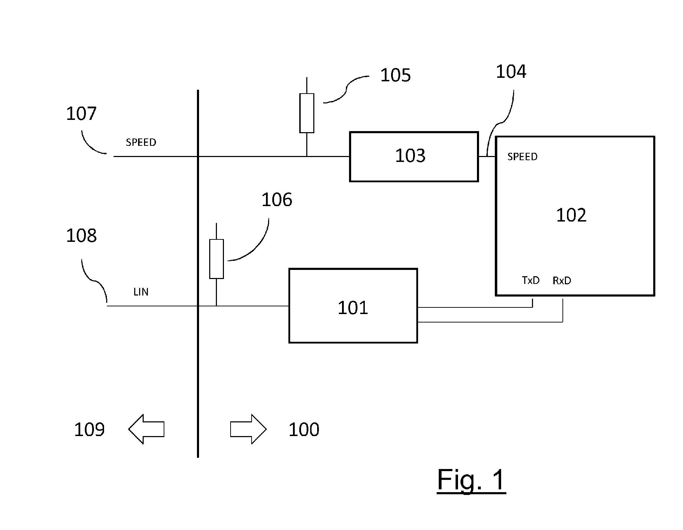

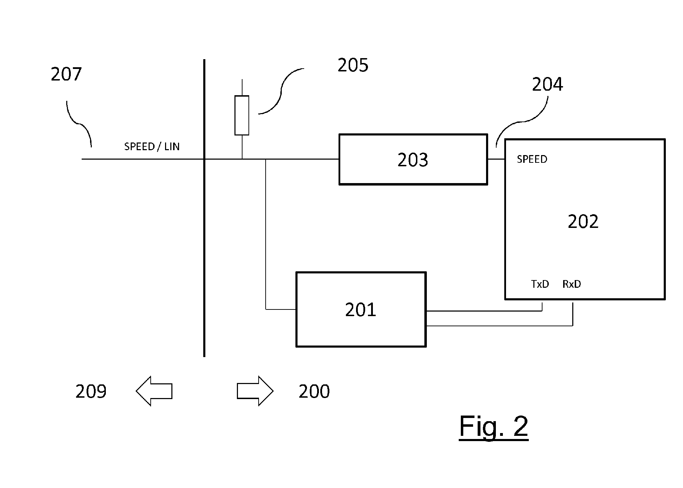

In Fig. 1 ist eine Steuereinrichtung für ein Cabrioverdeck entsprechend dem aktuellen Stand der Technik dargestellt. Die Bereiche für ein SPEED-Signal 107 und ein LIN-Bus Signal 108 liegen an zwei separaten Pins an der fahrzeugseitigen Schnittstelle 109 der Steuereinrichtung 100. Der Signalpegel des SPEED-Signals wird durch einen ersten Pull-up Widerstand 105 und eine Schaltung 103 aufbereitet und an einen gesonderten analogen oder digitalen Eingang 104 am Mikrocontroller 102 geführt. Das LIN-Bus Signal wird durch einen weiteren Pull-up Widerstand 106 an einen LIN-Transceiver 101 angepasst und von diesem an den RxD Eingang des Mikrocontrollers 102 geführt. In den Fig. 2-4 sind schematisch erfindungsgemäße Steuereinrichtungen dargestellt, in welchen ein LIN-Bus Signal und ein weiteres Signal über einen gemeinsamen Bereich 207,307,407 in das Innere der Steuereinrichtung geführt werden.

Figur 2 zeigt schematisch eine erfindungsgemäße Steuereinrichtung 200 welche an der fahrzeugseitigen Schnittstelle 209 ein LIN-Bus Signal und ein SPEED-Signal über einen gemeinsamen Bereich 207 in das Innere der Steuereinrichtung 200 führt. Der Signalpegel wird zuerst über einen Pull-up Widerstand 205 angepasst und in der Folge verzweigt, wobei ein Zweig der Eingangsleitung durch einen Pegelwandler 203 an einen Analog- oder Digitaleingang 204 an einem Mikrocontroller 202 geführt wird. Der andere Zweig der Eingangsleitung wird über einen LIN-Transceiver 201 an den RxD Eingang des Mikrocontrollers 202 geführt.

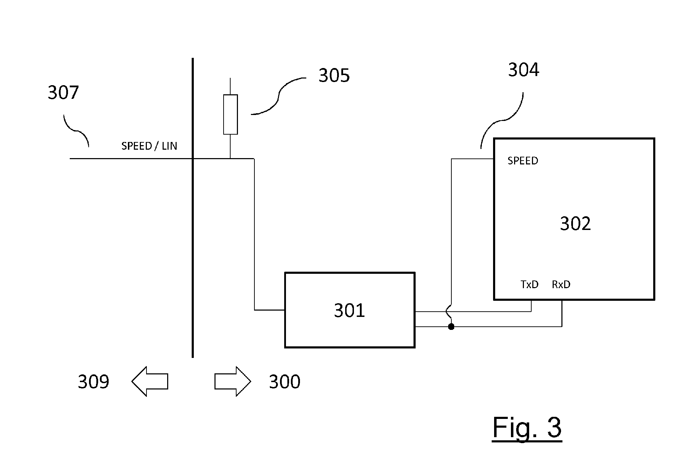

Figur 3 zeigt schematisch eine weitere Ausführungsform einer erfindungsgemäßen Steuereinrichtung 300 welche an der fahrzeugseitigen Schnittstelle 309 ein LIN-Bus Signal und ein SPEED-Signal über einen gemeinsamen Bereich 307 in das Innere der Steuereinrichtung 300 führt. Der Signalpegel wird wiederum über einen Pull-up Widerstand 305 angepasst. Die eingehenden Signale werden gemeinsam im LIN-Transceiver 301 verarbeitet und erst in der Folge verzweigt, wobei ein Zweig der Signalleitung an einen Analog- oder Digitaleingang 304 an einem Mikrocontroller 302 geführt wird. Der andere Zweig der Signalleitung wird an den RxD Eingang des Mikrocontrollers 302 geführt. Durch die Führung der Signalleitungen an separate Eingangspins des Mikrocontrollers 302 kann eine entsprechend ausgeführte Software die jeweils anliegenden Signale durch eine simultane Abfrage an einem RxD Eingang und einem Analog- oder Digitaleingang des Mikrocontrollers 302 auf Gültigkeit prüfen und entsprechend weiter verarbeiten.

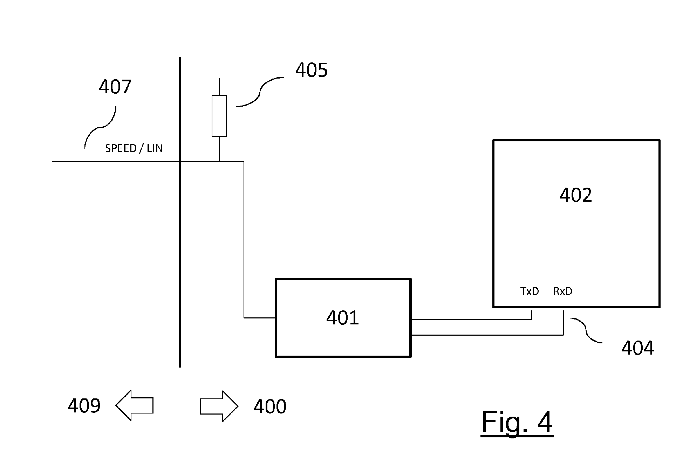

In Figur 4 wird eine Ausführungsform einer erfindungsgemäßen Steuereinrichtung 400 gezeigt, in welcher der Pull-up Widerstand 405 die Pegel der an einem gemeinsamen Bereich 407 anliegenden SPEED- oder LIN-Signale gegebenenfalls anpasst. Über einen Stecker 410, der sechs Steckerpins 411 aufweist ist die Steuereinrichtung 400 mit dem Fahrzeug verbunden. Vom LIN-Transceiver 401 werden die Signale ohne Verzweigung an einen RxD Eingang 404 eines Mikrocontrollers 402 geführt. Liegt ein SPEED-Signal am Bereich 207,307,407 einer fahrzeugseitigen Schnittstelle einer Steuereinrichtung 200,300,400, so darf es vom Mikrocontroller 202,302,402 nie als gültige LIN-Botschaft erkannt werden. Damit eine LIN-Botschaft nicht als gültiges SPEED-Signal erkannt wird, muss das weitere Eingangssignal mit einer Frequenz abgetastet werden, die mindestens doppelt so hoch ist, wie die höchste Frequenz der an der Eindraht-Bus Schnittstelle in einem standardisierten Normalbetrieb verwendeten Signale.

Um die Erfindung zu verdeutlichen wird ein Beispiel angeführt. Die Signale über den LIN-Bus werden mit Datenraten bis zu 20kBit/s übertragen, was einer maximalen Frequenz des Signals von circa 10kHz entspricht. Bei niedrigen Datenraten bis 10 kBit/ s liegt die Frequenz bei circa 5 kHz. Damit kann die Eingangsschaltung den Bereich des LIN Signals einfach filtern.

Demgegenüber liegt die Korrelation des SPEED- Signals so, dass das SPEED-Signal = Frequenz*3600/5000 ist. Fährt das Fahrzeug bei 50 km/h liegt die Frequenz bei 69,4 Hz bei 200 km/h bei 277,8 Hz. Damit ist der zu erkennende und zu trennende Bereich der Frequenzen definiert. Die Erfindung nutzt diese bekannte Tatsache, um das Steuergerät durch die Limitierung auf einen einfacheren Stecker kostengünstiger gestalten zu können.

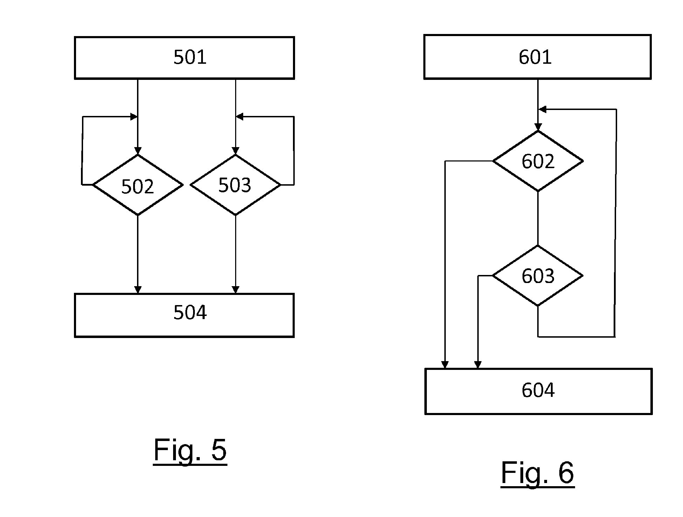

Fig. 5 zeigt schematisch wie ein vorgeschalteter Programmteil 501 eines Computerprogrammes auf einem Mikrocontroller 202,302 der Steuereinrichtung durch simultane Abfragen 502, 503 an einem RxD Eingang und einem Analog- oder Digitaleingang 204,304 des Mikrocontrollers die jeweils anliegenden Signale auf Gültigkeit als SPEED-Signal oder LIN-Botschaft prüft. Ein SPEED-Signal, dessen Frequenz sich normalerweise in einem Bereich deutlich unter 500 Hz bewegt, kann aufgrund seiner Gleichförmigkeit nicht das sogenannte "Synchronization Break" und das "Synchronization Field" eines LIN-Controllers 201,301,401 passieren und daher von einem nachgeschalteten Programmteil 504 nicht als gültige LIN-Botschaft interpretiert werden.

Fig. 6 zeigt wie die Signale an dem RxD Eingang 404 von einem geeignet ausgeführten vorgeschalteten Programmteil 601 empfangen und dann sequenziell von den Abfragen 602 und 603 auf Gültigkeit als SPEED-Signal oder als LIN-Botschaft geprüft werden. Bei positivem Ergebnis dieser Prüfung werden die Signale von einem nachgeschalteten Programmteil 604 entsprechend weiter verarbeitet.

Die in den Figuren 2-6 beispielhaft dargestellte Erfindung ermöglicht somit den kostengünstigen Aufbau von Steuereinrichtungen zur Steuerung von Cabrioverdecken, die mit möglichst vielen Anbindungsszenarien in verschiedenen Kraftfahrzeugtypen und -modellen kompatibel sind und gleichzeitig Verbindungsstecker mit einer geringen Zahl an Kontaktpins aufweisen.

Die Steuereinrichtung verfügt über einen möglichst kleinen Stecker, idealerweise über einen Stecker mit 6 Pins. Einer der Pins wird mit der Doppelfunktion belegt und ist mit dem Bereich der Steuerung verbunden, die beide Signale trennen kann.

Die Anbindung an den LIN Bus ist oftmals nur während der Produktion notwendig, um die Steuereinrichtung zu programmieren, danach wäre der Anschluss überflüssig.

In anderen Ausführungsformen ist die Anbindung des Steuergeräts des Cabrioverdeckes auch während des Fahrbetriebs gewünscht. Über den LIN Bus können Parameter wie Sensordaten über Temperatur übermittelt werden, die als Entscheidungsparameter für die Steuereinrichtung dienen. So kann verhindert werden, dass unterhalb einer gewissen Temperatur das Cabrioverdeck geöffnet wird, um die Mechanik zu entlasten.

**Bezugszeichenliste**

| | |
|---|---|
| 100 | Steuereinrichtung |
| 101 | LIN-Transceiver |
| 102 | Mikrocontroller |
| 103 | Schaltung |
| 104 | Analog- oder Digitaleingang |
| 105,106 | Pull-up Widerstände |
| 107 | Bereich SPEED-Signal |
| 108 | Bereich LIN-Bus |
| 109 | Schnittstelle fahrzeugseitig |
| | |
| 200 | Steuereinrichtung |
| 201 | LIN-Transceiver |
| 202 | Mikrocontroller |
| 203 | Pegelwandler |
| 204 | Analog- oder Digitaleingang |
| 205 | Pull-up Widerstand |
| 207 | Bereich |
| 209 | Schnittstelle fahrzeugseitig |
| | |
| 300 | Steuereinrichtung |
| 301 | LIN-Transceiver |
| 302 | Mikrocontroller |
| 304 | Analog- oder Digitaleingang |
| 305 | Pull-up Widerstand |
| 307 | Bereich |
| 309 | Schnittstelle fahrzeugseitig |
| | |
| 400 | Steuereinrichtung |
| 401 | LIN-Transceiver |
| 402 | Mikrocontroller |
| 404 | Analog- oder Digitaleingang |
| 405 | Pull-up Widerstand |
| 407 | Bereich |
| 409 | Schnittstelle fahrzeugseitig |
| 410 | Stecker |
| 411 | Steckerpins |
| 501 | Vorgeschalteter Programmteil |
| 502,503 | Simultane Abfragen |
| 504 | Nachgeschalteter Programmteil |
| 601 | Vorgeschalteter Programmteil |
| 602,603 | Sequenzielle Abfragen |
| 604 | Nachgeschalteter Programmteil |

## Patentansprüche

1. Steuereinrichtung (200,300,400) zur Steuerung eines Cabrioverdecks, wobei die Steuereinrichtung (200,300,400) an der fahrzeugseitigen Schnittstelle (209,309,409) zumindest einen Bereich (207,307,407) aufweist, der als Eindraht-Bus Schnittstelle zur seriellen Übertragung von Fahrzeugdaten ausgebildet ist und wobei die Steuereinrichtung (200,300,400) diesen Bereich (207,307,407) gleichzeitig benutzt um mindestens ein weiteres Eingangssignal zu verarbeiten,
**dadurch gekennzeichnet, dass** die Steuereinrichtung einen fahrzeugseitigen Stecker (410) aufweist, bei dem einer der Steckerpins (411) mit diesem Bereich der Steuereinrichtung (200,300,400) und mit Mitteln zur Abtastung der Eingangssignale verbunden ist, um das weitere Eingangssignal von den über die Eindraht-Bus Schnittstelle seriell übertragenen Fahrzeugdaten zu unterscheiden.

2. Steuereinrichtung nach Anspruch 1,
**dadurch gekennzeichnet, dass** die Eindraht-Bus Schnittstelle als LIN-Bus ausgebildet ist.

3. Steuereinrichtung nach Anspruch 1 oder 2,
**dadurch gekennzeichnet, dass** das weitere Eingangssignal ein niederfrequentes Signal ist.

4. Steuereinrichtung nach einem der vorhergehenden Ansprüche,
**dadurch gekennzeichnet, dass** das weitere Eingangssignal ein von der Fahrzeuggeschwindigkeit abhängiges Steuersignal ist.

5. Steuereinrichtung nach einem der vorhergehenden Ansprüche,
**dadurch gekennzeichnet, dass** das weitere Eingangssignal mit einer Frequenz abgetastet wird, die mindestens doppelt so hoch ist, wie die höchste Frequenz der an der Eindraht-Bus Schnittstelle in einem standardisierten Normalbetrieb verwendeten Signale.

6. Verfahren zum Betreiben eines Eindraht-Busses einer Steuereinrichtung (200,300) nach einem der vorhergehenden Ansprüche,
**dadurch gekennzeichnet, dass** ein Computerprogramm auf einem Mikrocontroller (202,302) der Steuereinrichtung durch eine simultane Abfrage an einem RxD Eingang und einem Analog- oder Digitaleingang (204,304) des Mikrocontrollers die jeweils anliegenden Signale auf Gültigkeit prüft.

7. Verfahren zum Betreiben eines Eindraht-Busses einer Steuereinrichtung (400) nach einem der Ansprüche 1 bis 6,
**dadurch gekennzeichnet, dass** ein Computerprogramm auf einem Mikrocontroller (402) durch sequenzielle Abfragen an einem RxD Eingang (404) des Mikrocontrollers das jeweils anliegende Signal auf Gültigkeit prüft.
